# EUROPEAN PATENT APPLICATION

(11) **EP 3 904 855 A1**
(43) Date of publication of application: **03.11.2021**
(21) Application number: 20172154.5
(22) Date of filing: 29.04.2020
(51) Int. Cl.: G01L 1/14, G01L 9/00

(54) **FLEXIBLE PRESSURE SENSOR AND METHOD FOR PREPARING THE SAME**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a flexible pressure sensor and a method for preparing the same. The flexible pressure sensor comprises a) a substrate, b) an interdigital electrode attached to the substrate via a chromium or titanium coating, and c) a foamed thermoplastic polyurethane-carbon composite sheet on the interdigital electrode, wherein the foamed thermoplastic polyurethane-carbon composite sheet comprises a thermoplastic polyurethane resin and a conductive carbon material. The flexible pressure sensor of the present invention exhibits good flexibility, high elasticity and pressure-sensitive features, as well as good stability. Meanwhile, the process for preparing the flexible pressure sensor of the present invention is simple and cost-effective.

## Description

### FIELD OF THE INVENTION

The present invention relates to the technical field of sensor manufacture. In particular, the present invention relates to a flexible pressure sensor and a method for preparing the same.

### BACKGROUND ART

A pressure sensor is a device converting a force signal into an electrical signal output by capturing changes in electrical properties of a sensitive material when subjected to a force. The application of pressure sensors has penetrated into many aspects of people's lives, such as aerospace, national defense, military affairs, water conservancy and hydropower, resource development, railway and ship transportation, medical diagnosis, electronic touch screens, electronic scales etc.

Currently, most pressure sensors are made of rigid sensitive materials such as metal or semiconductor strain gauges, and they have disadvantages of high brittleness, small strain, lack of flexibility, and discomfort. However, in the fields of human health, rehabilitation medicine, physical exercise, sports biology and so on, sensor flexibility is required. For example, in order to study the distribution of contact stress between diabetic feet of patients with diabetes and the floor, rigid sensors can hardly make full contact with the soles of the patients, therefore it is difficult to obtain a whole picture of the diseased feet.

Therefore, it is necessary to make the pressure sensor flexible so that changes in contact stress on a complex-shaped surface can be measured.

CN106370327A discloses a flexible pressure sensor comprising two oppositely-arranged electrode structures, wherein each electrode structure comprises a flexible substrate and a conductive layer arranged on the flexible substrate; the conductive layers of the two electrode structures are connected in a mutually-facing abut joint mode; the flexible substrate comprises a substrate body and multiple convex structures arranged on the substrate body; and the conductive layer covers the surface of the flexible substrate where the multiple convex structures are located. The flexible substrate is made of a material selected from any one of polydimethylsiloxane, ethylene-vinyl acetate copolymer, polyvinyl alcohol, styrene-butadiene-styrene block copolymer, aromatic random copolymer, butadiene styrene rubber, polyurethane elastomer, polyolefin elastomer, and polyamide elastomer.

However, many flexible materials, when subjected to a stress, experience little change in electrical properties. Thus, the flexible pressure sensor prepared therefrom is insensitive to pressure changes.

Therefore, there is still a need in the art for flexible pressure sensors that are sensitive to pressure changes.

### SUMMARY OF THE INVENTION

One objective of the present invention is to provide a flexible pressure sensor that is sensitive to pressure changes.

Therefore, according to a first aspect of the present invention, there is provided a flexible pressure sensor, comprising:
a) a substrate;
b) an interdigital electrode attached to the substrate via a chromium or titanium coating; and
c) a foamed thermoplastic polyurethane-carbon composite sheet on the interdigital electrode,
wherein the foamed thermoplastic polyurethane-carbon composite sheet comprises a thermoplastic polyurethane resin and a conductive carbon material.

According to a second aspect of the present invention, there is provided a method for preparing the flexible pressure sensor mentioned above, comprising the following steps:
I) applying the chromium or titanium coating onto the substrate;
II) disposing the interdigital electrode on the chromium coating; and
III) fixing the foamed thermoplastic polyurethane-carbon composite sheet onto the interdigital electrode to form the flexible pressure sensor.

The flexible pressure sensor of the present invention exhibits good flexibility, high elasticity and pressure-sensitive features, as well as good stability. Meanwhile, the process for preparing the flexible pressure sensor of the present invention is simple and cost-effective.

### BRIEF DESCRIPTION OF THE DRAWINGS

The present invention will be illustrated in conjunction with the drawings, in which:
FIG. 1 shows a schematic view of a flexible pressure sensor according to an embodiment of the present invention, a: a front view, b: a top view, in which ① represents a substrate, ② represents an interdigital electrode, and ③ represents a foamed thermoplastic polyurethane-carbon composite sheet.
FIG. 2 shows pressure-capacitance response curves of the flexible pressure sensors prepared in Examples 1-5 and Comparative Example 1, wherein the ordinate ΔC = Cp-Co, where Cp represents the capacitance under different compression ratios, and Co represents the capacitance under no compression.
FIG. 3 shows a time-capacitance response curve of the flexible pressure sensor (with 5 wt% conductive carbon black relative to the weight of the thermoplastic polyurethane) prepared in Example 3.
FIG. 4 shows a time-capacitance response curve of the flexible pressure sensor (with 1 wt% carbon nanotubes relative to the weight of the thermoplastic polyurethane) prepared in Example 5.

### DETAILED DESCRIPTION OF THE INVENTION

Hereafter, various aspects of the present invention and further objectives, features and advantages thereof will be illustrated in a more comprehensive manner.

According to the first aspect of the present invention, there is provided a flexible pressure sensor, comprising:
a) a substrate;
b) an interdigital electrode attached to the substrate via a chromium or titanium coating; and
c) a foamed thermoplastic polyurethane-carbon composite sheet on the interdigital electrode,
wherein the foamed thermoplastic polyurethane-carbon composite sheet comprises a thermoplastic polyurethane resin and a conductive carbon material.

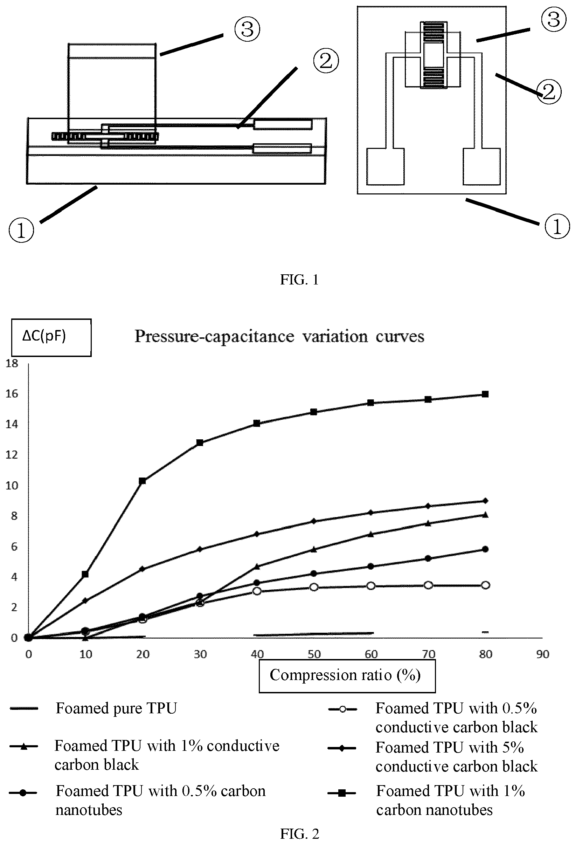

FIG. 1 shows a schematic view of a flexible pressure sensor according to the present invention. As illustrated in FIG. 1, ① represents a substrate, ② represents an interdigital electrode, and ③ represents a foamed thermoplastic polyurethane-carbon composite sheet. It should be understood that FIG. 1 is for illustrative purpose only, and is not intended to limit the present invention.

The substrate may be any substrate suitable for a sensor, for example, a glass substrate, a polylactic acid substrate, or a silicon substrate.

The interdigital electrode is attached on the same side of the substrate.

To ensure the interdigital electrode effectively attached to the substrate, the chromium or titanium coating preferably has a thickness in the range of 2-10 nm.

Preferably, the electrode material of the interdigital electrode is selected from a group consisting of gold, copper and silver.

Preferably, the interdigital electrode has a thickness in the range of 20-100 nm.

Preferably, the width of each finger of the interdigital electrode is in the range of 10-100 µm, and the finger pitch is in the range of 10-100 µm.

In some embodiments, the width of each finger of the interdigital electrode is 100 µm, and the finger pitch is 50 µm.

In some embodiments, the thermoplastic polyurethane-carbon composite sheet is composed of the thermoplastic polyurethane resin and the conductive carbon material.

Preferably, the foamed thermoplastic polyurethane-carbon composite sheet has a foaming ratio ranging from 3.5 to 5.

Preferably, the foamed thermoplastic polyurethane-carbon composite sheet has a hardness of 30A or lower, preferably in the range of 10-30A, as measured according to ISO868.

There is no specific limitation on the thermoplastic polyurethane resin, which may be a thermoplastic polyurethane resin commonly used in the polyurethane field.

Preferably, the thermoplastic polyurethane resin is a thermoplastic polyurethane (TPU) resin suitable for supercritical foaming.

Preferably, the thermoplastic polyurethane resin has a hardness of 80A or lower, preferably in the range of 60-80A, as measured according to ISO868.

Preferably, the thermoplastic polyurethane is polyether-based.

Preferably, the conductive carbon material is selected from a group consisting of conductive carbon black, carbon nanotubes, graphene powders, and graphene nanosheets, preferably selected from conductive carbon black and carbon nanotubes, and more preferably selected from carbon nanotubes.

Preferably, the conductive carbon black has a particle size in the range of 10-50 nm, for example, 30-45 nm.

Preferably, the carbon nanotubes have a length in the range of 0.5-30 µm, for example, 3-15 µm.

Preferably, the graphene powders have a single-layer ratio of greater than 80%, and a thickness in the range of 0.1-2 nm.

Preferably, the graphene nanosheets have a conductivity in the range of 500-1,000 S/cm, and a thickness in the range of 1-10 nm.

In some embodiments, the conductive carbon material is conductive carbon black which presents in the amount of 0.5-5 parts by weight, based on that the weight of the thermoplastic polyurethane resin is 100 parts by weight.

In some embodiments, the conductive carbon material is carbon nanotubes which are in the amount of 0.5-1 part by weight, based on that the weight of the thermoplastic polyurethane resin is 100 parts by weight.

In the foamed thermoplastic polyurethane-carbon composite sheet, the thermoplastic polyurethane is physically bonded to the conductive carbon material.

The foamed thermoplastic polyurethane-carbon composite sheet may be of any thickness or shape.

Preferably, the foamed thermoplastic polyurethane-carbon composite sheet has a thickness in the range of 6-12 mm.

Preferably, the foamed thermoplastic polyurethane-carbon composite sheet has a density in the range of 210-410 kg/m³.

According to the second aspect of the present invention, there is provided a method for preparing a flexible pressure sensor, comprising the following steps:
I) applying the chromium or titanium coating onto the substrate;
II) disposing the interdigital electrode on the chromium coating; and
III) fixing the foamed thermoplastic polyurethane-carbon composite sheet onto the interdigital electrode to form the flexible pressure sensor.

The chromium or titanium coating may be applied onto the substrate by vapor deposition or sputtering (including direct current sputtering and magnetron sputtering).

The interdigital electrode may also be disposed on the chromium coating layer by vapor deposition or sputtering (including direct current sputtering and magnetron sputtering).

The foamed thermoplastic polyurethane-carbon composite sheet may be fixed onto the interdigital electrode by a method known in the field of electronic devices (using an adhesive such as a polypropylene adhesive).

In some embodiments, the preparation method further comprises steps for providing the foamed thermoplastic polyurethane-carbon composite sheet mentioned above.

The foamed thermoplastic polyurethane-carbon composite sheet mentioned above may be provided by:
1) mixing the conductive carbon material with the thermoplastic polyurethane resin to obtain a mixture;
2) processing the mixture into thermoplastic polyurethane-carbon composite pellets; and
3) foaming the thermoplastic polyurethane-carbon composite pellets to obtain the foamed thermoplastic polyurethane-carbon composite sheet.

A person skilled in the art can easily mix the conductive carbon material with the thermoplastic polyurethane resin by a blending process known in the art (for example, by single-screw extrusion), and process the mixture into thermoplastic polyurethane-carbon composite pellets, for example, in the form of particles, small pieces or other available forms.

Likewise, a person skilled in the art can easily prepare a foamed thermoplastic polyurethane-carbon composite sheet by a foaming process known in the art (for example, a supercritical foaming process).

Preferably, in the step 3 above, the thermoplastic polyurethane-carbon composite sheet is foamed at a foaming ratio ranging from 3.5 to 5.

The resulting foamed thermoplastic polyurethane-carbon composite sheet has a hardness of 30A or lower, preferably in the range of 10-30A, as measured according to ISO868.

The terms "comprising" and "including" described in the present application cover the circumstances which further comprise or include other elements not specifically mentioned and the circumstances consisting of the elements mentioned.

Unless otherwise defined, all technical and scientific terms used herein have the same meaning as commonly understood by a person skilled in the field the present invention belongs to. When the definition of a term in the present description conflicts with the meaning as commonly understood by a person skilled in the field the present invention belongs to, the definition described herein shall apply.

Unless otherwise specified, all numerical values expressing amount of ingredients, reaction conditions and the like used in the description and claims are to be understood as being modified by the term "about". Accordingly, unless indicated to the contrary, the numerical values and parameters described herein are approximate values which are capable of being changed according to the desired performance obtained as required.

### Examples

The concept and technical effects of the present invention will be further described below in conjunction with the Examples so that a person skilled in the art can fully understand the objectives, features and effects of the present invention. It shall be understood that the Examples are for illustrative purposes only and the scope of the present invention is not limited thereto.

### Materials Used

Thermoplastic polyurethane: Desmopan® 9380AU DPS650 from COVESTRO;

Conductive carbon black: XF115 from XFNANO, with a length of 30-45 nm;

Carbon nanotubes: XFQ039 from XFNANO, with a length of 3-15 µm.

### Pressure-Capacitance Response Curve Measurement

Pressure-capacitance response curves under applied pressure were obtained by connecting two electrodes of the flexible piezoelectric sensor to the TH2827C digital bridge of Tonghui LCR through wires. The pressure was applied by a mechanical testing machine, meanwhile variations of the capacitance with pressure were measured.

### Time-capacitance response curve

A time-capacitance response curve was obtained by connecting two electrodes of the flexible piezoelectric sensor to the TH2827C digital bridge of Tonghui LCR through wires, and cycling the process of applying pressure and removing pressure.

### Example 1

### Preparation of a foamed thermoplastic polvurethane-carbon composite sheet

100 parts by weight of thermoplastic polyurethane and 0.5 part by weight of conductive carbon black were pre-mixed and extruded through a single-screw extruder to obtain thermoplastic polyurethane-carbon composite pellets, wherein the single-screw extruder had a barrel temperature of 170 °C-200 °C, and a rotation speed of 50-90 RPM.

A supercritical foaming device was used to foam the thermoplastic polyurethane-carbon composite pellets at a temperature of 120 °C and a pressure of 12 mpa for 60 minutes to obtain a foamed thermoplastic polyurethane-carbon composite sheet, with a foaming ratio of 5, and a thickness of 5 mm.

### Preparation of a flexible pressure sensor

A glass substrate was placed in acetone and isopropanol solutions for ultrasonic cleaning, then rinsed with deionized water and ethanol, then blow-dried with nitrogen and put in an oven to be dried by heating.

The glass substrate was covered with a mask and placed in a vacuum evaporator to vaporize a chromium coating having a thickness of about 5 nm onto the glass substrate.

The glass substrate with a chromium coating was covered with a mask and placed in a vacuum evaporator to vaporize a gold interdigital electrode having a thickness of about 50 nm onto the chromium coating, wherein the width of each finger was 100 µm and the finger pitch was 50 µm.

The foamed thermoplastic polyurethane-carbon composite sheet was fixed onto the gold interdigitated electrode with a polypropylene adhesive to obtain a flexible pressure sensor 1 within the scope of the present invention.

### Example 2

Example 2 was carried out with reference to Example 1, except that 1 part by weight of conductive carbon black was used to obtain a flexible pressure sensor 2 within the scope of the present invention.

### Example 3

Example 3 was carried out with reference to Example 1, except that 5 parts by weight of conductive carbon black were used to obtain a flexible pressure sensor 3 within the scope of the present invention.

### Example 4

Example 4 was carried out with reference to Example 1, except that 0.5 part by weight of carbon nanotubes was used to obtain a flexible pressure sensor 4 within the scope of the present invention.

### Example 5

Example 5 is performed with reference to Example 1, except that 1 part by weight of carbon nanotubes was used to obtain a flexible pressure sensor 5 within the scope of the present invention.

### Comparative Example 1

Comparative Example 1 was carried out with reference to Example 1, except that the conductive carbon material was not used, but a pure thermoplastic polyurethane was used to prepare a foamed thermoplastic polyurethane sheet in replacement of the foamed thermoplastic polyurethane-carbon composite sheet, thereby obtaining a comparative flexible pressure sensor 1 beyond the scope of the present invention.

### Example 6

The flexible pressure sensors prepared in Examples 1-5 and Comparative Example 1 were subjected to pressure-capacitance response curve measurement.

FIG. 2 shows pressure-capacitance response curves of the flexible pressure sensors prepared in Examples 1-5 and Comparative Example 1, in which the ordinate represents the difference between the capacitance under applied pressure and the initial capacitance, and the abscissa represents the pressure value.

As can be seen from the pressure-capacitance response curves of FIG. 2, the flexible pressure sensor prepared in Comparative Example 1, when compressed, barely showed any change in capacitance.

It also can be seen from the pressure-capacitance response curves of FIG. 2 that, compared with the flexible pressure sensor prepared in Comparative Example 1, the flexible pressure sensors prepared in Examples 1-5 exhibited characteristics of high sensitivity response. The higher the doping ratio of the conductive carbon material, the greater the capacitance changed with pressure. When pressure was applied to produce elastic deformation, the capacitance would gradually increase, and when pressure was removed, the capacitance would return to its original value.

It still can be seen from the pressure-capacitance response curves of FIG. 2 that even if the ratio of carbon nanotubes was lower than that of the conductive carbon black, the flexible pressure sensor with carbon nanotubes would have even stronger piezoelectric response than the flexible pressure sensor with conductive carbon black.

### Example 7

The flexible pressure sensors prepared in Examples 3 and 5 were subjected to time-capacitance response curve measurement.

When the sample was compressed from 10 mm to 4 mm or 6 mm, by using the method of cyclically applying pressure and removing pressure through an LCR precision digital bridge, the time-capacitance response curve of the foamed TPU carbon composite material was obtained.

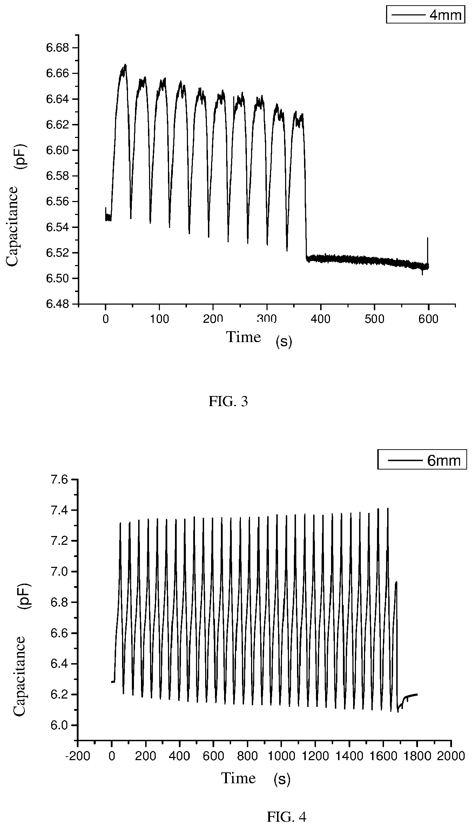

FIG. 3 shows the time-capacitance response curve of the flexible pressure sensor (with 5 wt% conductive carbon black relative to the weight of the thermoplastic polyurethane) prepared in Example 3.

FIG. 4 shows the time-capacitance response curve of the flexible pressure sensor (with 1 wt% carbon nanotubes relative to the weight of the thermoplastic polyurethane) prepared in Example 5.

It can be seen from FIGs. 3 and 4 that, the capacitance increases with an increase in pressure, and returns to the original value with a decrease in pressure, and maintains good stability after a certain number of cycles.

It also can be seen from FIGs. 3 and 4 that, the flexible pressure sensor with carbon nanotubes exhibits more stable piezoelectric response than the flexible pressure sensor with conductive carbon black.

Although some aspects of the present invention have been demonstrated and discussed, a person skilled in the art should realize that changes can be made to the above aspects without departing from the principles and spirit of the present invention. Therefore, the scope of the present invention will be defined by the claims and the equivalents thereof.

## Claims

1. A flexible pressure sensor, comprising:
a) a substrate;
b) an interdigital electrode attached to the substrate via a chromium or titanium coating; and
c) a foamed thermoplastic polyurethane-carbon composite sheet on the interdigital electrode, wherein the foamed thermoplastic polyurethane-carbon composite sheet comprises a thermoplastic polyurethane resin and a conductive carbon material.

2. The flexible pressure sensor according to Claim 1, wherein the substrate is selected from a group consisting of glass substrate, polylactic acid substrate, and silicon substrate.

3. The flexible pressure sensor according to Claim 1 or 2, wherein the chromium or titanium coating has a thickness in the range of 2-10 nm.

4. The flexible pressure sensor according to any of Claims 1-3, wherein the electrode material of the interdigital electrode is selected from a group consisting of gold, copper and silver.

5. The flexible pressure sensor according to any of Claims 1-4, wherein the interdigital electrode has a thickness in the range of 20-100 nm.

6. The flexible pressure sensor according to any of Claims 1-5, wherein the foamed thermoplastic polyurethane-carbon composite sheet is composed of the thermoplastic polyurethane resin and the conductive carbon material.

7. The flexible pressure sensor according to any of Claims 1-6, wherein the foamed thermoplastic polyurethane-carbon composite sheet has a foaming ratio ranging from 3.5 to 5.

8. The flexible pressure sensor according to any of Claims 1-7, wherein the foamed thermoplastic polyurethane-carbon composite sheet has a hardness of 30A or lower, preferably in the range of 10-30A, as measured according to ISO868.

9. The flexible pressure sensor according to any of Claims 1-8, wherein the thermoplastic polyurethane resin is polyether-based.

10. The flexible pressure sensor according to any of Claims 1-9, wherein the conductive carbon material is selected from conductive carbon black, carbon nanotubes, graphene powders, and graphene nanosheets, preferably selected from conductive carbon black and carbon nanotubes, and more preferably selected from carbon nanotubes.

11. The flexible pressure sensor according to any of Claims 1-10, wherein the conductive carbon material is conductive carbon black, which presents in the amount of 0.5-5 parts by weight, based on that the weight of the thermoplastic polyurethane resin is 100 parts by weight; preferably, the conductive carbon black has a particle size in the range of 10-50 nm, for example, 30-45 nm.

12. The flexible pressure sensor according to any of Claims 1-10, wherein the conductive carbon material is carbon nanotubes, which present in the amount of 0.5-1 part by weight, based on that the weight of the thermoplastic polyurethane resin is 100 parts by weight; preferably, the carbon nanotubes have a length in the range of 0.5-30 µm, for example, 3-15 µm.

13. A method for preparing a flexible pressure sensor according to any of Claims 1-12, comprising the following steps:
I) applying the chromium or titanium coating onto the substrate;
II) disposing the interdigital electrode on the chromium coating; and
III) fixing the foamed thermoplastic polyurethane-carbon composite sheet onto the interdigital electrode to form the flexible pressure sensor.

14. The method according to Claim 13, wherein the preparation of the foamed thermoplastic polyurethane-carbon composite sheet comprises the following steps:
1) mixing the conductive carbon material with the thermoplastic polyurethane resin to obtain a mixture;
2) processing the mixture into thermoplastic polyurethane-carbon composite pellets; and
3) foaming the thermoplastic polyurethane-carbon composite pellets to obtain the foamed thermoplastic polyurethane-carbon composite sheet.

15. The method according to Claim 14, wherein the thermoplastic polyurethane-carbon composite pellets is foamed at a foaming ratio of 3.5-5 in step 3.

16. The method according to any of Claims 13-15, wherein the chromium or titanium coating is applied onto the substrate by vapor deposition or sputtering.

17. The method according to any of claims 13-16, wherein the interdigital electrode is disposed on the chromium coating layer by vapor deposition or sputtering.
